# EUROPÄISCHE PATENTSCHRIFT

(11) **EP 1 534 722 B1**
(45) Veröffentlichungstag und Bekanntmachung des Hinweises auf die Patenterteilung: **22.03.2017**
(21) Anmeldenummer: 03753356.9
(22) Anmeldetag: 14.08.2003
(51) Int. Cl.: C07F 15/00

(54) **RHODIUM-UND IRIDIUM-KOMPLEXE**
RHODIUM AND IRIDIUM COMPLEXES
COMPLEXES RHODIUM ET IRIDIUM

(30) Priorität: 24.08.2002 DE 10238903
(43) Veröffentlichungstag der Anmeldung: 01.06.2005
(60) Teilanmeldung: 10009384.8
(73) Patentinhaber: Merck Patent GmbH, 64293 Darmstadt (DE)
(72) Erfinder: STÖSSEL, Philipp, 60487 Frankfurt /Main (DE); BACH, Ingrid, 65719 Hofheim (DE); SPREITZER, Hubert, 68519 Viernheim (DE)
(86) Internationale Anmeldenummer: PCT/EP2003/009015
(87) Internationale Veröffentlichungsnummer: WO 2004/026886

(56) Entgegenhaltungen:
- EP-A2- 1 239 526
- WO-A-02/060910
- WO-A-02/066552
- WO-A-03/079736
- WO-A-2002/044189
- WO-A-2002/081488
- WO-A-2003/084973
- LO S-C ET AL: "GREEN PHOSPHORESCENT DENDRIMER FOR LIGHT-EMITTING DIODES" ADVANCED MATERIALS, VCH VERLAGSGESELLSCHAFT, WEINHEIM, DE, Bd. 14, Nr. 13/14, 4. Juli 2002 (2002-07-04), Seiten 975-979, XP001130567 ISSN: 0935-9648 in der Anmeldung erwähnt
- MARKHAM J P J ET AL: "HIGH-EFFICIENCY GREEN PHOSPHORESCENCE FROM SPIN-COATED SINGLE-LAYER DENDRIMER LIGHT-EMITTING DIODES" APPLIED PHYSICS LETTERS, AMERICAN INSTITUTE OF PHYSICS. NEW YORK, US, Bd. 15, Nr. 80, 15. April 2002 (2002-04-15), Seiten 2645-2647, XP001074763 ISSN: 0003-6951 in der Anmeldung erwähnt
- MARKHAM J P J ET AL: "High-efficiency green phosphorescence from spin-coated single-layer dendrimer light-emitting diodes", APPLIED PHYSICS LETTERS, AMERICAN INSTITUTE OF PHYSICS, US, vol. 80, no. 15, 15 April 2002 (2002-04-15), pages 2645-2647, XP012030549, ISSN: 0003-6951, DOI: 10.1063/1.1469218

## Beschreibung

Metallorganische Verbindungen - speziell Verbindungen der d⁸-Metalle - werden in naher Zukunft als Wirkkomponenten (= Funktionsmaterialien) in einer Reihe von verschiedenartigen Anwendungen, die im weitesten Sinne der Elektronikindustrie zugerechnet werden können, Einsatz als funktionelle Komponenten finden.

Bei den auf organischen Komponenten basierenden Organischen-Elektrolumineszenz-Vorrichtungen (allg. Beschreibung des Aufbaus vgl. US-A-4,539,507 und US-A-5,151,629) bzw. deren Einzelbauteilen, den Organischen-Lichtemittierenden-Dioden (OLEDs) ist die Markteinführung bereits erfolgt, wie die erhältlichen Auto-Radios mit "Organischem Display" der Firma Pioneer belegen. Weitere derartige Produkte stehen kurz vor der Einführung. Trotz allem sind hier noch deutliche Verbesserungen nötig, um diese Displays zu einer echten Konkurrenz zu den derzeit marktbeherrschenden Flüssigkristallanzeigen (LCD) zu machen bzw. diese zu überflügeln.

Eine Entwicklung hierzu, die sich seit einigen Jahren abzeichnet, ist der Einsatz von metallorganischen Komplexen, die Phosphoreszenz statt Fluoreszenz zeigen [M. A. Baldo, S. Lamansky, P. E. Burrows, M. E. Thompson, S. R. Forrest, Applied Physics Letters, 1999, 75, 4-6].

Aus theoretischen Spin-statistischen Gründen ist unter Verwendung metallorganischer Verbindungen als Phosphoreszenz-Emittern eine bis zu vierfache Energie- und Leistungseffizienz möglich. Ob sich diese neue Entwicklung durchsetzen wird, hängt stark davon ab, ob entsprechende Device-Kompositionen gefunden werden können, die diese Vorteile (Triplett-Emission = Phosphoreszenz gegenüber Singulett-Emission = Fluoreszenz) auch in den OLEDs umsetzen können. Als wesentliche Bedingungen für praktische Anwendung sind hier insbesondere eine hohe operative Lebensdauer, eine hohe Stabilität gegenüber Temperaturbelastung und eine niedrige Einsatz- und Betriebsspannung, um mobile Applikationen zu ermöglichen, zu nennen.

Daneben muß der effiziente chemische Zugang zu den entsprechenden Organo-Metall-Verbindungen gegeben sein. Von besonderem Interesse sind dabei Organo-Iridium-Verbindungen. Bei diesen ist vor allem unter Berücksichtigung des Iridiumpreises von maßgebender Bedeutung, daß ein effizienter Zugang zu entsprechenden Derivaten ermöglicht wird.

Ein Schwachpunkt der bisher beschriebenen Phosphoreszenz-Emitter stellt deren schlechte Löslichkeit dar. So sind gerade in letzter Zeit häufig sogenannte Hybrid-Device-Strukturen erwogen worden, die die Vorteile der "small-molecule"-OLEDs mit denen der Polymer-OLEDs (PLEDs) verbinden. Dabei ist es besonders wichtig, die Verbindungen aus Lösung aufzubringen. Hierzu sind bereits mehrere Möglichkeiten beschrieben worden: (a) Aufbringen von puren Schichten von "small-molecules" bzw. Triplett-Emittern, bzw. (b) Aufbringen von Blends (= Mischungen) dieser in polymeren bzw. niedermolekularen Matrizes.
Erhoffte Vorteile dieser Hybrid-Strukturen sind nun unter anderem folgende:
- Das Aufbringen aus Lösung (v. a. mit Hilfe von hochaufgelösten Druckverfahren) dürfte langfristig deutliche Vorteile gegenüber dem heute gängigen Vakuum-Verdampfungsprozeß aufweisen, v. a. hinsichtlich Skalierbarkeit, Strukturierbarkeit, Beschichtungseffizienz und Ökonomie.
- Da derzeit noch keine polymeren Triplett-Emitter bekannt sind, können durch die Verwendung der Hybridstruktur die vorteilhaften Device-Eigenschaften der niedermolekularen Triplett-Emitter mit den vorteilhaften Aufbringungsmethoden der Polymere verknüpft werden.

Typische Phosphoreszenz-Emitter, wie sie bis dato berichtet wurden, sind metall-organische Komplexe, v. a. des Iridiums. Hier wird v. a. über Tris-(phenyl-pyridyl)-komplexe und Derivate berichtet.
Allerdings sind bisher nur - mit einer Ausnahme - Verbindungen beschrieben, die entweder Phenylpyridin direkt, oder mit Fluor, Methoxy oder ähnlichen Gruppen substituiertes Phenylpyridin, oder benzoanelliertes Phenylpyridin, als Liganden enthalten. Diese Komplexe weisen i. d. R. in gängigen Lösemitteln eine geringe Löslichkeit auf (z. B. < 2 g/L, häufig deutlich kleiner 1 g/L; siehe auch Angaben in den Beispielen).

P. L. Burn et al. beschreiben ein dendrimer-artiges Derivat (Adv. Mater. 2002, 14, 975; Appl. Phys. Lett. 2002, 80, 2645), welches höhere Löslichkeiten aufzuweisen scheint. Allerdings ist in den bisher dazu erschienenen Publikationen nicht aufgezeigt, wie diese Verbindung überhaupt zugänglich ist.

In WO 02/060910 wird ein Verfahren zur Herstellung tris-ortho-metallierter Iridiumkomplexe offenbart, wobei diese Komplexe unter anderem auch durch Arylgruppen substituiert sein können.

In WO 02/044189 werden Iridiumkomplexe offenbart, welche als koordinierende Gruppe eine Isochinolingruppe aufweisen. Dabei sind auch Komplexe mit Phenyl-isochinolinliganden offenbart, welche an der Phenylgruppe in para-Position zum Iridium mit Phenyl, 1-Naphthyl oder Phenyl-1-naphthyl substituiert sind.

In der nicht vorveröffentlichten Patentanmeldung WO 02/066552 werden metallhaltige Dendrimere offenbart, wobei der Kern ein ortho-metallierter Iridiumkomplex und die Dendrone aromatische Gruppen sind.

In der nicht vorveröffentlichten Patentanmeldung WO 02/081488 werden orthometallierte Iridiumkomplexe offenbart, welche am koordinierenden Phenylring in para-Position zum Metall eine Carbazolgruppe oder eine andere N-heterocyclische Gruppe aufweisen, welche über den Stickstoff an den Phenylring gebunden ist.

In der nicht vorveröffentlichten Patentanmeldung WO 03/079736 werden metallhaltige Dendrimere offenbart, wobei der Kern ein ortho-metallierter Iridiumkomplex ist und die Dendrone Stickstoffatome, unter anderem gebunden in Carbazolgruppen, enthalten.

Die nicht vorveröffentlichte Patentanmeldung EP 1239526 offenbart in Tabelle 16 die Verbindung 512, wobei es sich um einen Phenyl-substituierten Tris(phenyl-pyridyl)iridium-Komplex handelt.

Aus dem oben gesagten, ergeben sich zwei wichtige Aufgaben für den weiteren Fortschritt auf dem Gebiet der phosphoreszenten OLEDs:
1. Es besteht ein großer Bedarf an gut löslichen Triplettemittern.
2. Diese müssen synthetisch gut zugänglich sein, da - wie oben bereits erwähnt - der Preis für die "Rohstoffe" bereits enorm hoch ist.

Gegenstand der vorliegenden Erfindung sind deshalb 5'-Mono-, 5',5"-Bis- und 5',5",5"'-Tris-aryl/heteroaryl-funktionalisierte tris-orthometallierte Organo-Iridium-Verbindungen, gemäß Formel (I). Über eine entsprechende Aryl/heteroaryl-Substitution können entscheidende Materialeigenschaften, wie u. a. die Wellenlänge der Phosphoreszenzemission d. h. die Farbe, die Phosphoreszenzquantenausbeute und die Redox- und Temperaturstabilität der Emitter, eingestellt werden. Besonders wichtig, gerade im Zusammenhang mit dem o. g., ist dabei auch, daß gerade mit der hier vorliegenden Substitution, die Löslichkeit sehr stark verbessert werden kann (s. v. a. auch die Angaben im Experimentellen Teil). Dies ist v. a. für eine Verwendung mit der o. g. Hybridtechnik von entscheidender Bedeutung.

Die Klasse der 5'-Mono-, 5',5"-Bis- und 5',5",5"'-Tris-aryl/heteroaryl-funktionalisierten tris-orthometallierten Organo-Iridium-Verbindungen - gemäß Formel (I) - ist, bis auf die oben genannten Ausnahmen, neu und bisher in der Literatur nicht beschrieben worden, ihre effiziente Darstellung und Verfügbarkeit als Reinstoffe ist aber für eine Reihe von elektro-optischen Anwendungen von großer Bedeutung.

Wie oben berichtet, ist über die Synthese derartiger Verbindungen noch nicht berichtet worden, wodurch es selbst für den Fachmann schwer ist, die o. g. Resultate von Paul Burn et al. nachzuvollziehen.

Wie im folgenden beschrieben, haben wir ein überraschend einfaches, gut funktionierendes Verfahren zur Herstellung der o. g. neuen Verbindungen gefunden.

Als nächstliegender Stand der Technik für dieses Verfahren ist die übergangsmetallkatalysierte C-C-Kupplung von rein organischen Arylchloriden, - bromiden, -iodiden zu nennen, hier vor allem die Arbeiten von A. Suzuki et al., A. F. Littke et al., aber auch von S. P. Nolan et al.. Aus der großen Zahl von Veröffentlichungen zu diesem Reaktionstyp sei im folgenden auf einige ausgewählte Arbeiten verwiesen.
A. Suzuki et al., A. F. Littke et al. und J. P. Wolf et al. beschreiben die Nickel- und Palladium-katalysierte C-C-Kupplungsreaktion von organischen Arylhalogeniden mit Arylboronsäuren bzw. ihren Estern unter Verwendung von Phosphinliganden und einer Base [N. Miyaura, A. Suzuki Chem. Rev. 1995, 95, 2457; A. F. Littke, C. Dai, G, C. Fu J. Am. Chem. Soc. 2000, 122, 4020; J. P. Wolf, S. L. Buchwald Angew. Chem. 1999, 111, 2570]. Typischerweise werden bei diesen Reaktionstypen Umsätze von 70 - 99 % erreicht. Problematisch gestaltet sich die Reinigung der Rohprodukte, die häufig durch aufwendige chromatographische Verfahren erfolgt.

Neben den oben beschriebenen Verfahren sind Nickel- bzw. Palladium-katalysierte C-C-Kupplungsreaktionen zwischen rein organischen Arylhalogeniden und Arylboronsäuren bzw. ihren Estern unter Verwendung stickstoff-haltiger Ligandensysteme und einer Base, beschrieben worden. Als stickstoff-haltige Ligandensysteme haben sich Imidazol-2-ylidene bzw. deren protonierte Form, die Imidazolium-Salze, aber auch Amine bewährt [C. Zhang, J. Huang, M. L. Trudell, S. P. Nolan, J. Org. Chem. 1999, 64, 3804]. Auch hier werden mit einfachen Edukten typischerweise Umsätze von 50 - 99 % erreicht, wobei die Reinigung der Rohprodukte oft durch aufwendige chromatographische Verfahren erfolgt.

Die übergangsmetallkatalysierte Suzuki-Kupplung von koordinativ an ein Metallzentrum gebundenen Arylhalogeniden - d.h. von *Iridium-organischen Arylhalogeniden -* wie sie im Folgenden beschrieben ist, ist neu und in der Literatur bisher nicht bekannt.

Es wurde überraschend gefunden, daß die neuen Aryl/heteroaryl-substituierten Organometallverbindungen (I) - gemäß Schema 1 - ausgehend von den 5'-Mono-, 5',5"-Bis- und 5',5",5"'-Tris-halogen-substituierten tris-orthometallierten Organo-Iridium-Verbindungen (III), d. h. ausgehend von *metallorganischen Arylhalogeniden* - durch die übergangsmetallkatalysierte Umsetzung mit organischen Boronsäuren bzw. deren Estern, in Anwesenheit eines Phosphor- bzw. Stickstoff-haltigen Additivs und einer Base, sowie unter geeigneter Wahl der Reaktionsparameter wie Reaktionstemperatur, Reaktionsmedium, Konzentration und Reaktionszeiten reproduzierbar in etwa 90 - 98 % iger Ausbeute, ohne Verwendung chromatographischer Reinigungsverfahren, gegebenenfalls nach Umkristallisation, in Reinheiten von > 99 % nach NMR bzw. HPLC erhalten werden (siehe Beispiel 1-8). Die Herstellung der Organo-Iridium-Verbindungen der Formel (III) wird in der noch nicht offengelegten Deutschen Anmeldeschrift DE 10109027.7 eingehend beschrieben.

Das oben beschriebene Verfahren zeichnet sich durch drei Eigenschaften besonders aus:
Erstens ist die übergangsmetallkatalysierte, selektive 5'-Mono-, 5',5"-Bis- und 5',5",5"'-Tri-C-C-Kupplung von koordinativ gebundenen Arylhalogeniden des Iridiums - d.h. von *Iridium-organischen Arylhalogeniden -* unerwartet und in dieser Form nicht bekannt.

Zweitens ist der hohe erzielte Umsatz, der sich in den reproduzierbar sehr guten Ausbeuten an isoliertem Produkt widerspiegelt, unerwartet und einzigartig für die Suzuki-Kopplung von koordinativ gebundenen Arylhalogeniden.

Drittens fallen die erhaltenen Verbindungen, ohne aufwendige chromatographische Reinigung, gegebenenfalls nach Umkristallisation, in sehr guten Reinheiten von > 99 % nach NMR bzw. HPLC an. Dies ist für die Verwendung in optoelektronischen Bauelementen, bzw. der Benutzung als Zwischenprodukte für die Darstellung entsprechender Verbindungen essentiell.

Wie oben geschildert, sind die erfindungsgemäßen Verbindungen nicht vorbeschrieben und damit neu.

Diese erfindungsgemäßen Verbindungen weisen nun folgende Vorteile auf:
- Durch geeignete Substitution ist eine große Bandbreite von Emissionsfarben und Lagen der Energieniveaus einstellbar. Hierbei ist besonders darauf zu verweisen, daß gerade durch die große Variabilität von Aryl- und Heteroarylgruppen hier die Eigenschaften in einem sehr großen Bereich verschoben werden können.
- Durch entsprechende Seitenketten an den Aryl- oder Heteroarylresten bzw. durch diese selbst bereits (vgl. auch Daten im Experimentellen Teil), läßt sich die Löslichkeit der erzeugten Komplexe sehr weit erhöhen bzw. einstellen, ohne die sonstigen Eigenschaften negativ zu beeinflußen. Dies ist besonders deshalb bedeutend, da eine direkte Substitution an den direkt komplexierenden Kernen, häufig die Eigenschaften verändert, bzw. die synthetische Zugänglichkeit erschwert.

Gegenstand der vorliegenden Erfindung sind somit die Verbindungen gemäß Formel (I) (Schema 1), 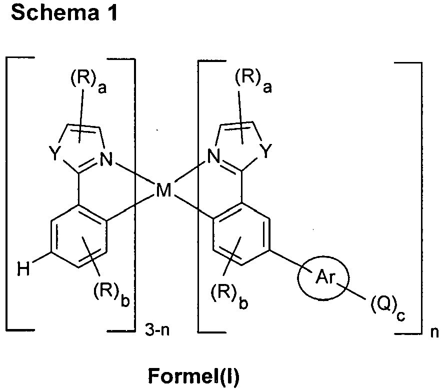 wobei die Symbole und Indizes folgende Bedeutung haben:
- M: Ir;
- Y: R-C=C-R, R-C=N;
- R: ist gleich oder verschieden bei jedem Auftreten H, F, Cl, NO₂, CN, eine geradkettige oder verzweigte oder cyclische Alkyl- oder Alkoxygruppe mit 1 bis 20 C-Atomen, wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann; wobei mehrere Substituenten R, sowohl am selben Ring als auch an den beiden unterschiedlichen Ringen zusammen wiederum ein weiteres mono- oder polycyclisches Ringsystem aufspannen können;
- Ar: ist ausgewählt aus Benzol, Biphenyl, 1,2- bzw. 1,3- bzw. 1,4-Terphenyl, Tetraphenyl, Fluoren, 1,3,5-Triphenylbenzol, Pyrimidin und 1,3,5-Triazin;
- Q: ist, gleich oder verschieden bei jedem Auftreten und steht für F, CN oder eine geradkettige oder verzweigte oder cyclische Alkyl- oder Alkoxygruppe mit 1 bis 20 C-Atomen, wobei ein oder mehrere nicht benachbarte CH₂-Gruppen durch -O- ersetzt sein können und wobei ein oder mehrere H-Atome durch F ersetzt sein können, oder eine Aryl- oder Heteroarylgruppe mit 4 bis 14 C-Atome, die durch einen oder mehrere, nicht aromatische Reste R substituiert sein kann;
- a: ist 0, 1 oder 2,
- b: ist 0, 1, 2 oder 3, bevorzugt 0 oder 1;
- c: ist 0 bis 15, bevorzugt 0, 1, 2, 3, 4 oder 5, besonders bevorzugt 0, 1 oder 2;
- n: ist 1, 2 oder 3;
ausgenommen sind dabei die folgenden Verbindungen:
a)

   CORE-[DENDRITE]ₙ

   worin CORE ein Metallion oder eine Gruppe, welche ein Metallion enthält, darstellt, n eine ganze Zahl von 1 oder mehr darstellt, jedes DENDRITE, gleich oder verschieden, eine inhärent zumindest teilkonjugierte dendritische molekulare Struktur darstellt, welche Aryl- und/oder Heteroarylgruppen oder Stickstoff enthält und optional Vinyl- oder Acetylenylgruppen enthält, welche über sp²- oder sp-hybridisierte Kohlenstoffatome der (Hetero)arylvinyl- und -acetylenylgruppen oder über Einfachbindungen zwischen N und (Hetero)arylgruppen gebunden sind, wobei CORE mit einer Einfachbindung endet, welche an ein sp²-hybridisiertes (Ring)Kohlenstoffatom der ersten (Hetero)arylgruppe oder Stickstoff bindet, woran mehr als ein mindestens teilkonjugierter dendritischer Zweig gebunden ist, wobei das Kohlenstoffatom oder N einen Teil von DENDRITE bilden;
b)

   CORE-[DENDRON]n

   worin CORE eine Gruppe darstellt, die ein Metallkation enthält, n eine ganze Zahl von 2 oder mehr darstellt, jedes DENDRON, gleich oder verschieden, eine dendritische molekulare Struktur darstellt, welche mindestens ein Stickstoffatom enthält, welches Teil eines aromatischen Ringsystems bildet oder direkt an mindestens zwei aromatische Gruppen gebunden ist, so dass zwei oder mehr koordinierende Gruppen unterschiedliche DENDRON gebunden haben, wobei jedes Dendron Verzweigungseinheiten enthält und optional Verbindungsgruppen, wobei jede Verzweigungseinheit unabhängig voneinander ausgewählt ist aus Aryl, Heteroaryl oder Stickstoff und Aryl oder Heteroaryl ist optional kondensiert und wobei jede Verbindungsgruppe unabhängig voneinander gewählt ist aus einer oder mehreren Aryl-, Vinyl- oder Acetylenylgruppen, wobei CORE mit einer Einfachbindung zu dem ersten Stickstoffatom oder aromatischen Ring endet, an den mehr als eine dendritische Kette angebunden ist, wobei dieses Stickstoffatom oder dieser Ring einen Teil von DENDRON bilden;
c) die folgende Verbindung:

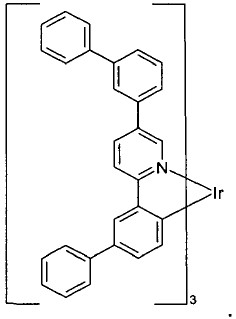

Bevorzugt sind erfindungsgemäße Verbindungen (I), bei denen b = 0 ist.

Bevorzugt sind weiterhin unsymmetrisch substituierte Arylreste Ar. Unsymmetrisch bedeutet hier, daß die Aryl-Fragmente inklusive der Substituenten keine C₂-Symmetrie-Achse aufweisen, die durch die mit dem Metallkomplex verbindende Bindung geht. Grund für diese Bevorzugung ist, daß dadurch die Löslichkeit weiter erhöht werden kann.

Ebenfalls bevorzugt sind erfindungsgemäße Verbindungen (I), bei denen der Rest Q für F, CN oder eine geradkettige oder verzweigte oder cyclische Alkyl- oder Alkoxygruppe mit 1 bis 6 C-Atomen, wobei eine oder mehrere benachbarte CH₂-Guppe durch -CF₂- ersetzt sein kann, steht.

Ebenfalls bevorzugt sind erfindungsgemäße Verbindungen (I), (la), (II) und (IIa), bei denen c größer oder gleich 1 ist.

Außerdem sind Gegenstand der vorliegenden Erfindung Verfahren zur Herstellung der Verbindungen gemäß Formel (I) durch Umsetzung von Verbindungen der Formel (III), 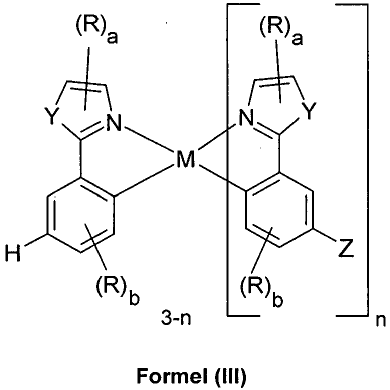 wobei die Symbole und Indizes M, Y, R, a, b und n die gleiche Bedeutungen wie für Formel (I) besitzen, und:
- Z: Cl, Br oder I ist,
mit einer Arylboronsäure oder einem Arylboronsäureester der Formel (V) 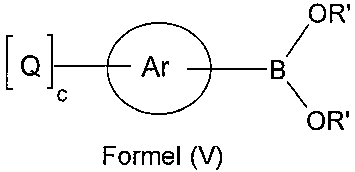 wobei die Symbole und Indizes Q, Ar und c die gleiche Bedeutungen wie oben beschrieben haben, und:
- R': gleich oder verschieden bei jedem Auftreten, H oder ein aliphatischer oder aromatischer Kohlenwasserstoffrest mit 1 bis 20 C-Atomen, wobei mehrere Substituenten R' ein mono- oder polycyclisches Ringsystem aufspannen können,
in einem Reaktionsmedium und in Gegenwart eines Übergangsmetalls bzw. einer Übergangsmetallverbindung, eines Phosphor-haltigen bzw. Stickstoff-haltigen Additives und einer Base.

Im Sinne dieses Anmeldetextes soll dabei die Bezeichnung Arylboronsäure auch die entsprechenden Anhydride (cyclisch oder offenkettig) mit umfassen.

Erfindungsgemäße Übergangsmetalle bzw. Übergangsmetallverbindungen sind Nickel oder Nickelverbindungen bzw. Palladium oder Palladiumverbindungen.

Erfindungsgemäß sind Nickel bzw. Nickelverbindungen wie z.B. elementares Nickel, Nickelschwamm, Nickel auf Kieselgur, Nickel auf Aluminiumoxid, Nickel auf Silica, Nickel auf Kohle, Nickel(II)acetat, Nickel(II)acetylacetonat, Nickel(II)chlorid, -bromid, iodid, Additionsverbindungen des Typs NiL₂X₂ wobei X Chlor, Brom, Iod und L einem neutralen Liganden wie z. B. Ammoniak, Acetonitril, Propionitril, Benzonitril, entspricht, Nickel(II)nitrat, Nickel(II)sulfat, Nickel(II)oxalat, Bis-cyclooctadiennickel(0).

Erfindungsgemäß sind Palladium bzw. Palladiumverbindungen wie z.B. elementares Palladium, Palladiumschwamm, Palladiumschwarz, Palladium auf Aktivkohle, Palladium auf Aluminiumoxid, Palladium auf Silica, Palladium auf Alkali- bzw. Erdalkalicarbonaten wie Natrium-, Kalium-, Calcium-, Strontium- oder Bariumcarbonat, Palladium auf Strontium- oder Bariumsulfat, bzw. Palladiumverbindungen wie z.B. Palladium(II)acetat, Palladium(II)trifluoroacetat, Palladium(II)propionat, Palladium(II)acetylacetonat, Palladium(II)chlorid, -bromid, iodid, Additionsverbindungen des Typs PdL₂X₂ wobei X Chlor, Brom, Iod und L einem neutralen Liganden wie z. B. Ammoniak, Acetonitril, Propionitril, Benzonitril, Cyclooctadien entspricht, Palladium(II)nitrat, Palladium(II)sulfat, Palladium(II)tetramin acetat, Palladium(II)tetrakis(acetonitril)-tetrafluoroborat, Tetrakis(triphenylphosphino)palladium(0) und Tris-(dibenzylidenaceton)-dipalladium(0).

Das erfindungsgemäße molare Verhältnis von Nickel, einer Nickelverbindung, Palladium oder einer Palladiumverbindung zu den Verbindungen (III) bzw. (IV) beträgt 0.1 n : 1 bis 0.00001 n : 1.

Erfindungsgemäß wird als Phosphor-haltiges Additiv ein Phosphin verwendet.

Erfindungsgemäße Phosphin-Liganden sind aus der Gruppe der Tri-Aryl-Phosphine, Di-Aryl-Alkyl-Phosphine, Aryl-Dialkyl-Phosphine, Trialkyl-Phosphine, Tri-Hetaryl-Phosphine, Di-Hetaryl-Alkyl-Phosphine, Hetaryl-Dialkyl-Phosphine, Di-Aryl-Hetaryl-Phosphine, Aryl-Di-Hetaryl-Phosphine, wobei die Substituenten am Phosphor gleich oder verschieden, chiral oder achiral sein können wobei ein oder mehrere der Substituenten die Phosphorgruppen mehrerer Phosphine verknüpfen können und wobei ein Teil dieser Verknüpfungen auch ein oder mehrere Metallatome sein können, so z.B. Triphenylphosphin, Tri-o-tolylphosphin, Tri-mesitylphosphin, Tri-*o-*anisylphosphin, Tri-(2,4,6-trismethoxyphenyl)phosphin, *Tert*-butyl-di-*o*-tolylphosphin, Di-*tert*-butyl-*o*-tolylphosphin, Dicyclohexyl-2-biphenylphosphin, Di-*tert*-butyl-2-biphenylphosphin, Triethylphosphin, Tri-*iso*-propyl-phosphin, Tri-cyclohexylphosphin, Tri-*tert*-butylphosphin, Tri-*tert*-pentylphosphin, Bis(di-*tert*-butylphosphino)methan, 1,1'-Bis(di-*tert*-butylphosphino)ferrocen.

Besonders bevorzugt sind die Phosphine Tri-o-tolylphosphin, Dicyclohexyl-2-biphenylphosphin, Di-*tert*-butyl-2-biphenylphosphin, Tri-*tert*-butylphosphin und Tri-*tert*-pentylphosphin.

Erfindungsgemäß werden als Stickstoff-haltige Additive Imidazolium-Salze, Imidazol-2-ylidene bzw. Amine und Aminocarbonsäuren verwendet.

Bevorzugt werden als stickstoff-haltige Additive Imidazolium-Salze wie z. B. 1,3-Bis(phenyl)imidazolium hydrochlorid, 1,3-Bis(2-methylphenyl)imidazolium hydrochlorid, 1,3-Bis(2,6-dimethylphenyl)imidazolium hydrochlorid, 1,3-Bis-(2,4,6-trimethylphenyl)imidazolium hydrochlorid, 1,3-Bis(2,6-di-iso-propylphenyl)-imidazolium hydrochlorid, 1,3-Bis(2,6-di-*tert*-butylphenyl)imidazolium hydrochlorid, bzw. Imidazol-2-ylidene wie z. B. 1,3-Bis(phenyl)imidazol-2-yliden, 1,3-Bis(2-methylphenyl)imidazol-2-yliden, 1,3-Bis(2,6-dimethylphenyl)imidazol-2-yliden, 1,3-Bis(2,4,6-trimethylphenyl)imidazol-2-yliden, 1,3-Bis(2,6-di-*iso*-propylphenyl)imidazol-2-yliden, 1,3-Bis(2,6-di-*tert*-butylphenyl)imidazol-2-yliden, bzw. aromatische Amine und Aminocarbonsäuren wie Pyridin, Lutidin, 2,2'-Bipyridyl, oder Chinolin oder α-, β-, γ, δ-Aminocarbonsäuren bzw. deren N-alkylierte Formen bzw. deren Natrium- oder Kaliumsalze so z. B. Anthranilsäure, Dimethylanthranilsäure, 2-Pyridincarbonsäure, Dimethylglycin, Dimethylaminobuttersäure oder 3-Indolylessigsäure verwendet.

Das erfindungsgemäße molare Verhältnis des Phosphor- bzw. Stickstoff-haltigen Additives zu Nickel, einer Nickelverbindung, Palladium oder einer Palladiumverbindung beträgt 0.5 : 1 bis 1000 : 1.

Erfindungsgemäße Basen sind organische Base wie z. B. Alkali- und Erdalkalimetall-Alkoholate so z. B. Lithium-, Natrium, Kalium-, Magnesium-, Strontium- und Barium-methanolat, -ethanolat, -propanolat, -butanolat, -isopropanolat, -*iso*-butanolat, -sec-butanolat, -*tert*-butanolat, -phenolat, organische Amine wie z.B. Trimethylamin, Triethylamin, Tributylamin, Di-*iso*-propylamin, N-Ethyl-di-*iso*-propylamin, Morpholin, N-Methylmorpholin, N-Ethylmorpholin, Pyridin, 2-, 3-, 4- Methylpyridin, Lutidin oder Collidin, Tetraalkylammoniumhydroxide so z.B. Tetramethyl-, Tetraethyl-, Tetrapropyl- und Tetrabutylammoniumhydroxid, Alkali- und Erdalkalimetall-Carboxylate so z. B. Lithium-, Natrium, Kalium-, Magnesium-, Strontium- und Barium-formiat, -acetat, -propionat, -butyrat, -oxalat, oder -benzoat oder Mischungen der genannten Basen.

Ebenfalls erfindungsgemäße Basen sind anorganische Basen wie z. B. Ammoniak, Alkali- und Erdalkalimetall-Oxide so z. B. Lithium-, Natrium, Kalium-, Magnesium-, Strontium- und Barium-oxid, Alkali- und Erdalkalimetall-hydroxide so z. B. Lithium-, Natrium, Kalium-, Magnesium-, Strontium- und Barium-hydroxid, Alkali- und Erdalkalimetall-carbonate so z. B. Lithium-, Natrium, Kalium-, Cäsium-, Magnesium-, Strontium- und Bariumcarbonat, Alkalimetall-hydrogencarbonate so z. B. Lithium-, Natrium, Kalium-, Cäsiumhydrogencarbonat, Alkalimetall-phosphate, hydrogenphosphate, dihydrogenphosphate so z. B. Lithium-, Natrium-, Kaliumphosphat, -hydrogenphosphat, -dihydrogenphosphat, Alkali- und Erdalkalifluoride wie Lithium-, Natrium, Kalium-, Cäsium-, Magnesium-, Strontium- und Bariumfluorid oder Mischungen der genannten Basen.

Das erfindungsgemäße molare Verhältnis der organischen oder anorganischen Base zu den Verbindungen (III) beträgt 0.5 n : 1 bis 100 n : 1.

Erfindungsgemäße Reaktionsmedien sind protische oder aprotische, halogenfreie oder halogenierte Lösemittel so z.B. Alkohole wie Methanol, Ethanol, Propanol, Butanol, mehrwertige Alkohole wie Ethylenglykol oder Propylenglykol, Nitrile wie Acetonitril, Propionitril oder Benzonitril, Ether wie Diethylether, THF oder Dioxan, aromatische Kohlenwasserstoffe wie Toluol, *o*-, *m*-, *p*-Xylol oder ein Gemisch der isomeren Xylole, Mesitylen, Anisol, Nitrobenzol oder Chlorbenzol, N,N-Dialkylamide wie Dimethylformamid, Dimethylacetamid oder N-Methylpyrrolidinon, Sulfoxide wie Dimethylsulfoxid, Sulfone wie Dimethylsulfon oder Sulfolan, oder Mischungen der genannten Lösungsmittel.

Dem organischen Reaktionsmedium kann gegebenenfalls Wasser zugesetzt werden, wobei je nach verwendetem organischen Lösungsmittel die Reaktion einphasig oder auch zweiphasig durchgeführt wird.

Erfindungsgemäß wird die Umsetzung im Temperaturbereich von 20°C bis 200°C, bevorzugt bei 60°C bis 150°C durchgeführt.

Erfindungsgemäß liegt die Konzentration der Iridium-haltigen Edukte - Verbindungen (III) - im Bereich von 0.0005 mol/l bis 2 mol/l, besonders bevorzugt im Bereich von 0.002 mol/l bis 0.5 mol/l.

Erfindungsgemäß können die Iridium-haltigen Edukte gelöst oder suspendiert im Reaktionsmedium vorliegen.

Erfindungsgemäß wird die Reaktion innerhalb von 1 Stunde bis zu 100 Stunden durchgeführt, bevorzugt innerhalb von 1 h bis 60 h.

Erfindungsgemäß kann die Reaktion unter Zusatz von inerten Mahlkörpern wie z. B. Keramik-, Glas- oder Metallkugeln oder Pall- oder Raschig-Ringen durchgeführt werden.

Die Herstellung der erfindungsgemäßen Verbindungen der Formel (I) erfolgt mittels des vorstehend beschriebenen Verfahrens und führt zu Verbindungen mit einer Reinheit (mittels 1 H-NMR und/oder HPLC bestimmt) mehr als 99%.

Mit den hier erläuterten Synthesemethoden lassen sich unter anderem die im folgenden dargestellten Beispiele für Verbindungen (I) herstellen.

| | | |
|---|---|---|
| 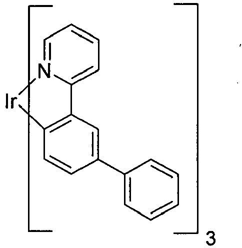 | 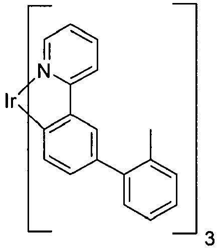 | 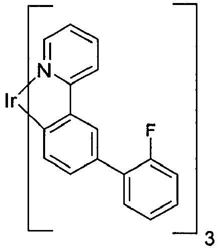 |
| Beispiel 1 | Beispiel 2 | Beispiel 3 |
| 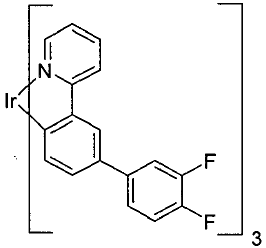 | 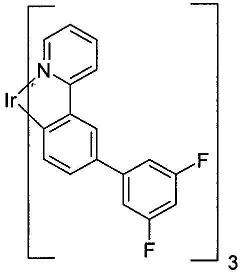 | 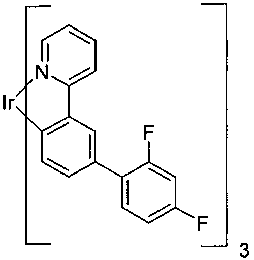 |
| Beispiel 4 | Beispiel 5 | Beispiel 6 |
| 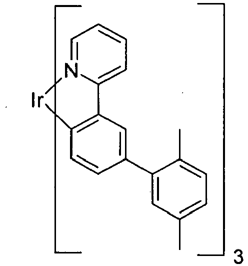 | 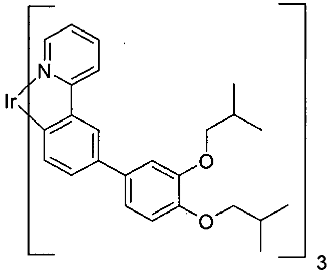 | 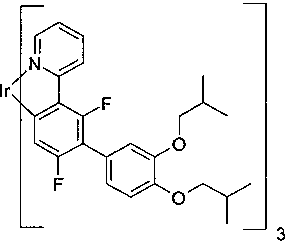 |
| Beispiel 7 | Beispiel 8 | Beispiel 13 |
| 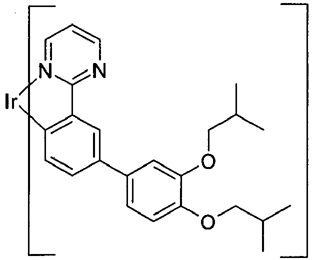 | 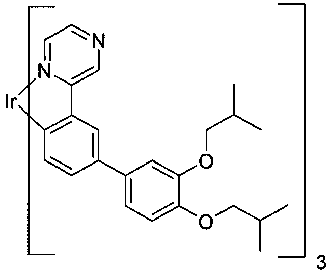 | 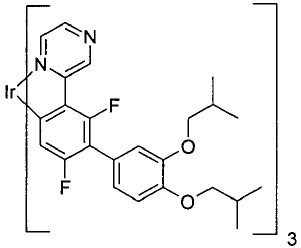 |
| Beispiel 16 | Beispiel 17 | Beispiel 18 |
| 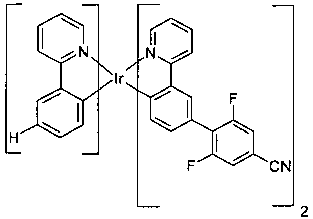 | 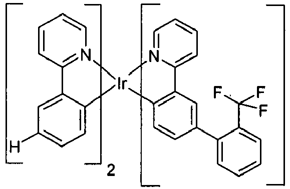 | 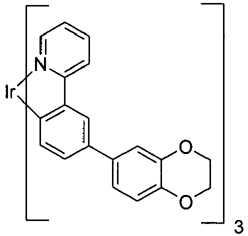 |
| Beispiel 19 | Beispiel 20 | Beispiel 30 |
| 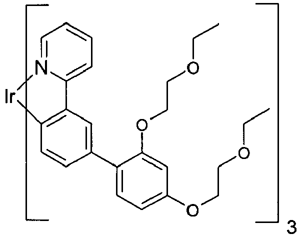 | 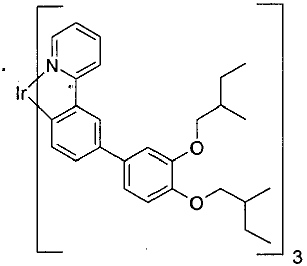 | |
| Beispiel 33 | Beispiel 34 | |

Für die Anwendung der erfindungsgemäßen Materialien in den bereits o. g. und auch unten noch erläuterten elektronischen Bauelementen, kann es nun vorteilhaft sein, diese in weitere Materialien einzumischen.
Besonders bevorzugt ist hierbei das Einmischen in polymere Verbindungen. Deshalb ist ein weiterer Bestandteil der vorliegenden Erfindung Mischungen von einer oder mehrerer Verbindungen der Formel (I) gemäß Anspruch 1 mit nicht konjugierten, teilkonjugierten oder konjugierten Polymeren.

Beispiele für diese Polymere, die sich zum Mischen eignen, sind solche aus der Gruppe der Polyfluorene, Poly-spirobifluorene, Poly-para-phenylene, Poly-paraphenylenevinylene, Poly-carbazole, Poly-vinylcarbazole, Polythiophene oder auch aus Copolymeren, die mehrere der hier genannten Einheiten aufweisen.

Da die Beschichtung bevorzugt aus Lösung geschieht, ist es bevorzugt, daß die entsprechenden Polymere in organischen Lösemitteln löslich sind.

Es ist auch möglich, die erfindungsgemäßen Materialien mit nicht-polymeren Materialien zu mischen. Des weiteren kann es noch Vorteile bringen, Mehrkomponenten-Mischungen, enthaltend erfindungsgemäße Materialien, Polymere und weitere niedermolekulare Materialien zu verwenden.

Eine weitere Möglichkeit besteht auch darin, die so erhaltenen erfindungsgemäßen Verbindungen nun als Co-Monomere in konjugierte oder auch teilkonjugierte Polymere mit ein-zu-polymerisieren. So können sie u. a. in lösliche Polyfluorene (z. B. gemäß EP-A-842208 oder WO 00/22026), Poly-spirobifluorene (z. B. gemäß EP-A- 707020), Poly-para-phenylene (z. B. gemäß WO 92/18552), Poly-carbazole, Polythiophene (z. B. gemäß EP-A-1028136) oder auch Copolymere die mehrere der hier genannten Einheiten aufweisen, durch Polymerisation inkorporiert werden.

Diese Polymere finden Verwendung als aktive Komponenten in elektronischen Bauteilen, wie z. B. Organischen Leuchtdioden (OLEDs), Organischen Integrierten Schaltungen (O-ICs), Organischen Feld-Effekt-Transistoren (OFETs), Organischen Dünnfilmtransistoren (OTFTs), Organischen Solarzellen (O-SCs) oder auch Organische Laserdioden (O-Laser).

Die vorliegende Erfindung wird durch die folgenden Beispiele näher erläutert, ohne sie darauf beschränken zu wollen. Der Fachmann kann aus den Schilderungen ohne erfinderisches Zutun weitere erfindungsgemäße Komplexe herstellen bzw. das erfindungsgemäße Verfahren anwenden.

### Beispiele

### 1. Synthese von symmetrisch und asymmetrisch funktionalisierten tris-orthometallierten Organo-Iridium-Verbindungen:

Die nachfolgenden Synthesen wurden - sofern nicht anders angegeben - in unter einer Schutzgasatmosphäre getrockneten Lösungsmitteln durchgeführt. Die Edukte wurden von ALDRICH [Benzolboronsäure, 2-Methylbenzolboronsäure, 2-Fluorbenzolboronsäure, 2,4-Difluorbenzolboronsäure, 3,4-Difluorbenzolboronsäure, 3,5-Difluorbenzolboronsäure, 2,5-Dimethylphenylboronsäure, Kaliumphosphat wasserfrei, Palladium(II)acetat, Tri-o-tolylphosphin] bezogen. 3,4-Bis-butoxy-benzolboronsäure wurde nach der offengelegten Anmeldung WO 01/34722 A1, *fac*-Tris[2-(2-pyridinyl-κN)(5-bromphenyl)-κC]-iridium(III) wurde wie in WO 02/068435 beschrieben, dargestellt.

### Beispiel 1: fac-Tris[2-(2-pyridinyl-κN)(5-(phenyl)phenyl)-κC]-iridium(III)

Eine Mischung von 8.92 g (10 mmol) *fac-Tris*[2-(2-pyridinyl-κN)(5-bromphenyl)-κC]-iridium(III), 5.12 g (42 mmol) Benzolboronsäure, 13.37 g (63 mmol) Tri-kaliumphosphat (wasserfrei), wurde mit einer Lösung von 182.62 mg (0.6 mmol) Tri-*o*-tolylphosphin in 160 ml Dioxan und mit einer Lösung von 22.44 mg (0.1 mmol) Palladium(II)acetat in 160ml Toluol und 150ml Wasser versetzt. Die Reaktionsmischung wurde- unter gutem Rühren mit einem KPG-Rührer - 60 h auf 85°C erhitzt. Nach dem Abkühlen wurde zweimal mit je 200 ml Wasser gewaschen. Die Phasen wurden getrennt, und die organische Phase auf 50 ml eingeengt. Anschließend wurde die Lösung auf 150ml Ethanol gegossen. Der so erhaltene gelbe, mikrokristalline Niederschlag wurde abfiltriert (P4) und dreimal mit je 100 ml Ethanol gewaschen und dann im Vakuum (60°C, 10⁻⁴ mbar) getrocknet. Die Ausbeute - bei einer Reinheit von > 99.0 % nach ¹H-NMR und HPLC - betrug 8.31g- 8.54g entsprechend 94.2 - 96.8 %.
¹H-NMR (DMSO): [ppm] = 8.39 - 8.38 (br. m, 3H), 8.10 (d, 3 H), 7.87-7.84 (br. m, 3 H), 7.71-7.69 (br m, 6 H), 7.56-7.55 (br. m, 3 H), 7.41-7.38 (br. m, 6 H), 7.27-7.24 (m, 3 H), 7.20 - 7.18 (m, 3 H), 7.10-7.08 (m, 3 H), 6.86-6.85(m, 3 H).

### Beispiel 2: fac-Tris[2-(2-pyridinyl-κN)(5-(o-tolyl)phenyl)-κC]-iridium(III)

Eine Mischung von 8.92 g (10 mmol) *fac*-Tris[2-(2-pyridinyl-κN)(5-bromphenyl)-κC]-iridium(III), 8.56 g (63 mmol) 2-Methylbenzolboronsäure, 13.37 g (63 mmol) Tri-kaliumphosphat (wasserfrei) wurde mit einer Lösung von 182.62 mg (0.6 mmol) Tri-o-tolylphosphin in 160 ml Dioxan und mit einer Lösung von 22.44 mg (0.1 mmol) Palladium(II)acetat in 160ml Toluol und 150ml Wasser versetzt. Die Reaktionsmischung wurde- unter gutem Rühren mit einem KPG-Rührer - 60 h auf 85°C erhitzt. Aufarbeitung analog zu Beispiel 1. Die Ausbeute - bei einer Reinheit von > 99.0 % nach ¹H-NMR und HPLC - betrug 8.66 g-8.84 g entsprechend 93.7 - 95.4 %.
¹H-NMR (DMSO): [ppm] = 8.26 - 8.24 (br. m, 3H), 7.83 - 7.79 (br. m, 3 H), 7.76 - 7.75 (m, 3 H), 7.58 - 7.57 (m, 3 H), 7.25 - 7.17 (br. m, 15 H), 6.84 - 6.82 m, 3 H), 6.76 - 6.74 (m, 3 H), 2.27 (s, 9 H).

### Beispiel 3: fac-Tris[2-(2-pyridinyl-κN)(5-(2-fluorphenyl)phenyl)-κC]-iridium(III)

Eine Mischung von 8.92 g (10 mmol) *fac*-Tris[2-(2-pyridinyl-κN)(5-bromphenyl)-κC]-iridium(III), 5.87 g (42 mmol) 2-Fluorbenzolboronsäure, 13.37 g (63 mmol) Tri-kaliumphosphat (wasserfrei) wurde mit einer Lösung von 182.62 mg (0.6 mmol) Tri-o-tolylphosphin in 160 ml Dioxan und mit einer Lösung von 22.44 mg (0.1 mmol) Palladium(II)acetat in 160ml Toluol und 150ml Wasser versetzt. Die Reaktionsmischung wurde- unter gutem Rühren mit einem KPG-Rührer - 60 h auf 85°C erhitzt. Aufarbeitung analog zu Beispiel 1. Die Ausbeute - bei einer Reinheit von > 99.0 % nach ¹H-NMR und HPLC - betrug 9.04 g - 9.16 g entsprechend 96.5 - 97.8 %.
¹H-NMR (DMSO): [ppm] = 8.28 - 8.27 (br. m, 3H), 7.97 (br s, 3 H), 7.87 - 7.83 (br. m, 3 H), 7.59 - 7.54 (br. m, 6 H), 7.33 - 7.30 (br. m, 3 H), 7.25 - 7.20 (br. m, 9 H), 6.98 - 6.96 (m, 3 H), 6.87 - 6.86 (m, 3 H).

### Beispiel 4: fac-Tris[2-(2-pyridinyl-κN)(5-(3,4-difluorphenyl)phenyl)-κC]-iridium(III)

Eine Mischung von 8.92 g (10 mmol) fac-Tris[2-(2-pyridinyl-κN)(5-bromphenyl)-κC]-iridium(III), 6.63 g (42 mmol) 3,4-Difluorbenzolboronsäure, 13.37 g (63 mmol) Tri-kaliumphosphat (wasserfrei) wurde mit einer Lösung von 182.62 mg (0.6 mmol) Tri-o-tolylphosphin in 160 ml Dioxan und mit einer Lösung von 22.44 mg (0.1 mmol) Palladium(II)acetat in 160ml Toluol und 150ml Wasser versetzt. Die Reaktionsmischung wurde- unter gutem Rühren mit einem KPG-Rührer - 60 h auf 85°C erhitzt. Aufarbeitung analog zu Beispiel 1. Die Ausbeute - bei einer Reinheit von > 99.0 % nach ¹H-NMR und HPLC - betrug 9.16 g - 9.47 g entsprechend 92.5 - 95.6 %.
¹H-NMR (DMSO): [ppm] = 8.45 - 8.43 (br. m, 3H), 8.14 (br s, 3 H), 7.89 - 7.86 (br. m, 3 H), 7.85 - 7.79 (br. m, 3 H), 7.56 - 7.55 (m, 6 H), 7.45 - 7.40 (br. m, 3 H), 7.21 - 7.19 (br. m, 3 H), 7.10 - 7.08 (br. m, 3 H), 6.82 - 6.81 (m, 3H).

### Beispiel 5: fac-Tris[2-(2-pyridinyl-κN)(5-(3,5-difluorphenyl)phenyl)-κC]-iridium(III)

Eine Mischung von 8.92 g (10 mmol) *fac*-Tris[2-(2-pyridinyl-κN)(5-bromphenyl)-κC]-iridium(III), 6.63 g (42 mmol) 3,5-Difluorbenzolboronsäure, 13.37 g (63 mmol) Tri-kaliumphosphat (wasserfrei) wurde mit einer Lösung von 182.62 mg (0.6 mmol) Tri-o-tolylphosphin in 160 ml Dioxan und mit einer Lösung von 22.44 mg (0.1 mmol) Palladium(II)acetat in 160ml Toluol und 150ml Wasser versetzt. Die Reaktionsmischung wurde- unter gutem Rühren mit einem KPG-Rührer - 60 h auf 85°C erhitzt. Aufarbeitung analog zu Beispiel 1. Die Ausbeute - bei einer Reinheit von > 99.0 % nach ¹H-NMR und HPLC - betrug 9.64 g - 9.75 g entsprechend 97.3 - 98.4 %.
¹H-NMR (DMSO): [ppm] = 8.50 - 8.48 (br. m, 3H), 8.21 - 8.20 (br. d, 3 H), 7.90 - 7.87 (br. m, 3 H), 7.55 - 7.54 (m, 3 H), 7.51 - 7.49 (br. m, 6 H), 7.25 - 7.21 (br. m, 3 H), 7.18 - 7.14 (m, 3 H), 7.09 - 7.05 (br. m, 3 H), 6.83 - 6.80 (m, 3H).

### Beispiel 6: fac-Tris[2-(2-pyridinyl-κN)(5-(2,4-diffuorphenyl)phenyl)-κC]-iridium(III)

Eine Mischung von 8.92 g (10 mmol) *fac*-Tris[2-(2-pyridinyl-κN)(5-bromphenyl)-κC]-iridium(III), 6.63 g (42 mmol) 2,4-Difluorbenzolboronsäure, 13.37 g (63 mmol) Tri-kaliumphosphat (wasserfrei) wurde mit einer Lösung von 182.62 mg (0.6 mmol) Tri-o-tolylphosphin in 160 ml Dioxan und mit einer Lösung von 22.44 mg (0.1 mmol) Palladium(II)acetat in 160ml Toluol und 150ml Wasser versetzt. Die Reaktionsmischung wurde- unter gutem Rühren mit einem KPG-Rührer - 60 h auf 85°C erhitzt. Aufarbeitung analog zu Beispiel 1. Die Ausbeute - bei einer Reinheit von > 99.0 % nach ¹H-NMR und HPLC -betrug 9.45 g - 9.59 g entsprechend 95.4 - 96.8 %.
¹H-NMR (DMSO): [ppm] = 8.29 - 8.27 (br. m, 3H), 7.95 (br s, 3 H), 7.87 -7.83 (br. m, 3 H), 7.63 -7.59 (br m, 3 H), 7.55 - 7.54 (br. m, 3 H), 7.30 - 7.23 (br. m, 3 H), 7.22 - 7.20 (m, 3 H), 7.14 - 7.11 (br. m, 3 H), 6.94 - 6.92 (br. m, 3H), 6.85 - 6.84 (m, 3H)

### Beispiel 7: fac-Tris[2-(2-pyridinyl-κN)(5-(2,5-dimethylphenyl)phenyl)-κC]-iridium(III)

Eine Mischung von 8.92 g (10 mmol) *fac*-Tris[2-(2-pyridinyl-κN)(5-bromphenyl)-κC]-iridium(III), 9.29 g (62 mmol) 2,5-Dimethylbenzolboronsäure, 13.37 g (63 mmol) Trikaliumphosphat (wasserfrei) wurde mit einer Lösung von 182.62 mg (0.6 mmol) Tri-o-tolylphosphin in 160 ml Dioxan und mit einer Lösung von 22.44 mg (0.1 mmol) Palladium(II)acetat in 160ml Toluol und 150ml Wasser versetzt. Die Reaktionsmischung wurde- unter gutem Rühren mit einem KPG-Rührer - 48 h auf 85°C erhitzt. Aufarbeitung analog zu Beispiel 1. Die Ausbeute - bei einer Reinheit von > 99.0 % nach ¹H-NMR und HPLC - betrug 9.24 g - 9.33 g entsprechend 95.6 -96.5 %.
¹H-NMR (DMSO): [ppm] = 8.49 - 8.23 (br. m, 3H), 7.82 -7.78 (br. m, 3 H), 7.74 - 7.73 (m, 3 H), 7.57 - 7.56 (m, 3 H), 7.19 - 7.17 (br. m, 3 H), 7.12 - 7.11 (m, 3 H), 7.05 (br s, 3 H), 7.00 - 6.98 (br. m, 3 H), 6.82 - 6.81 (d, 3 H), 6.75 - 6.73 (br. m, 3 H), 2.26 (s, 9 H), 2.22 (s, 9 H).

### Beispiel 8: fac-Tris[2-(2-pyridinyl-κN)(5-(3,4-bis(2-methylpropoxy)phenyl) phenyl)-κC]-iridium(III)

Eine Mischung von 8.92 g (10 mmol) fac-Tris[2-(2-pyridinyl-κN)(5-bromphenyl)-κC]-iridium(III), 19.9 g (75 mmol) 3,4-Bis(2-methylpropoxy)phenylboronsäure, 13.37 g (63 mmol) Tri-kaliumphosphat (wasserfrei) wurde mit einer Lösung von 182.62 mg (0.6 mmol) Tri-o-tolylphosphin in 160 ml Dioxan und mit einer Lösung von 22.44 mg (0.1 mmol) Palladium(II)acetat in 160ml Toluol und 150ml Wasser versetzt. Die Reaktionsmischung wurde- unter gutem Rühren mit einem KPG-Rührer - 48 h auf 85°C erhitzt. Aufarbeitung analog zu Beispiel1. Die Ausbeute - bei einer Reinheit von > 99.0 % nach ¹H-NMR und HPLC - betrug 12.03 g - 12.44 g entsprechend 91.5 - 94.6 %.
¹H-NMR (DMSO): [ppm] = 8.37 - 8.35 (br. m, 3H), 8.00 (br d, 3 H), 7.86 - 7.82 (br. m, 3 H), 7.56 - 7.55 (m, 3 H), 7.21 - 7.20 (m, 3 H), 7.16 - 7.14 (br. m, 6 H), 7.02 - 7.00 (m, 3 H), 6.95 - 6.93 (m, 3 H), 6.82 - 6.80 (m, 3 H), 3.82 (d, 6 H), 3.74 (d, 6 H), 2.01 (m, 6 H), 1.00 - 0.98 (m, 36 H).

### Beispiel 9: fac-Tris[2-(2-pyridinyl-κN)(5-(2',3',6',7'-tetrakis(2-methylbutoxy)-9,9'-spiro-bifluoren)phenyl)-κC]-iridium(III)

Eine Mischung von 8.92 g (10 mmol) *fac*-Tris[2-(2-pyridinyl-κN)(5-bromphenyl)-κC]-iridium(III), 30.0 g (42 mmol) 2',3',6', 7'-Tetrakis(2-methylbutoxy)-9,9'-spiro-bifluoren-2-boronsäure, 13.37 g (63 mmol) Tri-kaliumphosphat (wasserfrei) wurde mit einer Lösung von 182.62 mg (0.6 mmol) Tri-o-tolylphosphin in 160 ml Dioxan und mit einer Lösung von 22.44 mg (0.1 mmol) Palladium(II)acetat in 160ml Toluol und 150ml Wasser versetzt. Die Reaktionsmischung wurde- unter gutem Rühren mit einem KPG-Rührer - 48 h auf 85°C erhitzt. Aufarbeitung analog zu Beispiel 1. Die Ausbeute - bei einer Reinheit von > 99.8 % nach ¹H-NMR - betrug 23.7 g entsprechend 93.1%.
¹H-NMR (DMSO): [ppm] = 7.85 (d, 3H), 7.837.78 (m, 6 H), 7.63(s, 3 H), 7.56 - 7.52 (m, 6 H), 7.41 - 7.40 (d, 3 H), 7.33 - 7.30 (m, 3 H), 7.21 (d, 6 H), 7.06 (m, 3 H), 6.92 - 6.90 (br, d, 6 H), 6.80 (m, 3 H), 6.70-6.53 (s br, 3 H), 6.64 (d, 3 H), 6.16 (d, 6 H), 3.85 (m, 6 H), 3.83 (m, 6 H), 3.40 (m, 12 H), 1.92 (m, 6 H), 1.68 (m, 12 H), 1.44-1.36 (m, 6 H), 1.33-1.27(m, 6 H), 1.13-1.07 (m, 6 H), 1.05-1.03 (m, 18 H), 0.97-0.94 (m, 18 H), 0.86-0.82 (m, 18 H), 0.81- 0.76 (m, 18 H).

### 2. Angaben zur Löslichkeit von Komplexen:

**Tabelle 1. Löslichkeiten verschiedener erfindungsgemäßer Komplexe.**

| Verbindung | Aryl-Rest | Löslichkeit @20°C in Toluol, [g/L] | Kommentar |
|---|---|---|---|
| Ir(ppy)₃ | kein | <0,30 | Vergleichsbeispiel |
| **1** | Phenyl | 6,3 | gem. Anmeldeschrift |
| **2** | o-tolyl | 25 | gem. Anmeldeschrift |
| **7** | 2,5-Dimethylphenyl | 32 | gem. Anmeldeschrift |
| **8** | 3,4-Bis(2-methyl-propoxy)phenyl | 92 | gem. Anmeldeschrift |
| **34** | Bis-3,4-(2-methyl-butoxyphenyl | 126 | gem. Anmeldeschrift |

Wie man aus den Angaben leicht entnehmen kann, erhöht schon das Einfügen einer Phenylgruppe am Liganden (Übergang von der Grundverbindung Ir(ppy)₃ zur Verbindung 1) die Löslichkeit um einen Faktor 20. Weitere Erhöhung kann, wie oben gezeigt, dann durch entsprechende Substitution am Arylrest erreicht werden.

### 3. Herstellung und Charakterisierung von Organischen Elektroluminszenz-Vorrichtungen, die erfindungsgemäße Verbindungen enthalten:

Die Herstellung von LEDs erfolgte nach dem im folgenden skizzierten allgemeinen Verfahren. Dieses mußte natürlich im Einzelfall auf die jeweiligen Gegebenheiten (z. B. Schichtdickenvariation um optimale Effizienz bzw. Farbe zu erreichen) angepaßt werden.

### 3.1 Allgemeines Verfahren zur Herstellung von OLEDs

Nachdem man die ITO-beschichteten Substrate (z. B. Glasträger, PET-Folie) auf die richtige Größe zugeschnitten hat, werden sie in mehreren Reinigungsschritten im Ultraschallbad gereinigt (z.B. Seifenlösung, Millipore-Wasser, Isopropanol).

Zur Trocknung werden sie mit einer N₂-Pistole abgepustet und in einem Exsikkator gelagert. Vor der Beschichtung mit den organischen Filmen werden sie mit einem Ozon-Plasma-Gerät für ca. 20 Minuten behandelt. Es kann sich empfehlen, als erste organische Schicht eine polymere Lochinjektionsschicht zu verwenden. Dies ist in der Regel ein konjugiertes, leitfähiges Polymer, wie z. B. ein Polyanilinderivat (PANI) oder eine Polythiophenderivat (z. B. PEDOT, BAYTRON P™ der H.C. Starck). Diese wird dann durch Spin-Coaten (Lackschleudern) aufgebracht.

Die organischen Schicht(en) können nun durch verschiedenartige Methoden aufgebracht werden:
1. Zur Erzeugung der im Text genannten Hybridstrukturen können die Triplettemitter entweder als Reinschicht oder in Mischung mit anderen Verbindungen aus Lösung (z. B. durch Spin-Coaten) aufgebracht werden.
2. Es kann für einige der erfindungsgemäßen Verbindungen aber ebenfalls möglich sein, diese durch normales Vakuumprozessieren aufzubringen. Entsprechende Verfahren sind bereits vielfach dokumentiert, beispielsweise in der noch nicht offengelegten Anmeldeschrift DE 10215010.9.

Es wurden folgende OLEDs hergestellt und charakterisiert. Es sei darauf verwiesen, daß die entsprechenden Devices i. d. R. nicht optimiert sind (d. h. z. B. die Schichtdicken oder die exakten Zusammensetzungen wurden nicht variiert).

### 3.2 LED-Beispiele gemäß Typ 1 (Hybrid-OLEDs):

Es wurden die in Tabelle 1 wiedergegebenen OLEDs aus Lösung präpariert und untersucht. Die einzelnen Ergebnisse sind in der genannten Tabelle zusammengefaßt.

Es kamen dabei folgende weitere Verbindungen zum Einsatz:
- PEDOT =: leitfähiges Polythiophen-derivat (PEDOT = Poly((2,3-ethylendioxy)thiophen); aufgebracht aus wässriger Dispersion, enthaltend PSSH (Polystyrolsulfonsäure); kommerziell erhältlich als BAYTRON B der BAYER AG, Leverkusen.
- PVK =: Poly-vinylcarbazol, bezogen von ALDRICH.
- S-CBP =: 2,2',7,7'-Tetrakis-(9-carbazolyl)-spiro-9,9'-bifluoren; synthetisiert aus 2,2',7,7'-Tetrabrom-spiro-9,9'-bifluoren und Carbazol gemäß der nichtoffengelegten Anmeldeschrift DE 10153450.7.

**Tabelle 2. Devicedaten von OLEDs, enthaltend erfindungsgemäße Komplexe.**

| # | PEDOT [nm] | Org. Schicht [nm] | Verb. gem. Beispiel | Zusammensetzung Org. Schicht | Beschichtung aus | Eff. [Cd/A] / U [V] @ 100 Cd/m² | Eff. [Cd/A] / U [V] @ 800 Cd/m² | Eff. [Cd/A] / U [V] @ 5000 Cd/m² | λₘₐₓ (EL) [nm] (CIE1931) |
|---|---|---|---|---|---|---|---|---|---|
| 1 | 20 | 80 | 1 | PVK : S-CBP : 1 | Chlorbenzol | 11.6 | 17.4 | 22.2 | 525 |
| | | | | 80: 18 : 2 | 20 mg/mL | /11 | /13 | /15 | (0.36/0.60) |
| 2 | 20 | 80 | 7 | PVK : S-CBP : 7 | Chlorbenzol | 14.8 | 18.4 | 19.5 | 522 |
| | | | | 80: 18 : 2 | 20 mg/mL | /10 | /11 | /13 | (0.37/0.59) |
| 3 | 20 | 80 | 8 | PVK : S-CBP : 8 | Chlorbenzol | 20.8 | 24.3 | 24.4 | 530 |
| | | | | 80: 18 : 2 | 20 mg/mL | / 11 | / 13 | / 15 | (0.39/0.59) |

Für diese nicht-optimierten LEDs sind die erreichten Effizienzen, besonders bei hohen Leuchtdichten, überraschend hoch. Was durch Optimierung (z. B. bessere Injektionsbedingungen) sicherlich noch erreicht werden kann, ist eine deutliche Verringerung der benötigten Spannungen.

## Patentansprüche

1. Verbindungen der Formel (I), 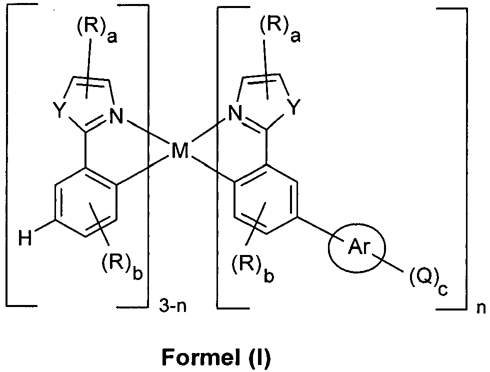 wobei die Symbole und Indizes folgende Bedeutung haben:
M Ir;
Y R-C=C-R, R-C=N;
R ist gleich oder verschieden bei jedem Auftreten H, F, Cl, CN, eine geradkettige oder verzweigte oder cyclische Alkyl- oder Alkoxygruppe mit 1 bis 20 C-Atomen, wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann; wobei mehrere Substituenten R, sowohl am selben Ring als auch an den beiden unterschiedlichen Ringen zusammen wiederum ein weiteres mono- oder polycyclisches Ringsystem aufspannen können;
Ar ist ausgewählt aus Benzol, Biphenyl, 1,2- bzw. 1,3- bzw. 1,4-Terphenyl, Tetraphenyl, Fluoren, 1,3,5-Triphenylbenzol, Pyrimidin und 1,3,5-Triazin;
Q ist gleich oder verschieden bei jedem Auftreten und steht für F, CN oder eine geradkettige oder verzweigte oder cyclische Alkyl- oder Alkoxygruppe mit 1 bis 20 C-Atomen, wobei ein oder mehrere nicht benachbarte CH₂-Gruppen durch -O- ersetzt sein können und wobei ein oder mehrere H-Atome durch F ersetzt sein können, oder eine Aryl- oder Heteroarylgruppe mit 4 bis 14 C-Atome, die durch einen oder mehrere, nicht aromatische Reste R substituiert sein kann;
a ist 0, 1 oder 2;
b ist 0, 1, 2 oder 3, bevorzugt 0 oder 1;
c ist 0 bis 15, bevorzugt 0, 1, 2, 3, 4 oder 5, besonders bevorzugt 0, 1 oder 2;
n ist 1, 2 oder 3;
ausgenommen sind dabei die folgenden Verbindungen:
a)
CORE-[DENDRITE]ₙ
worin CORE ein Metallion oder eine Gruppe, welche ein Metallion enthält, darstellt, n eine ganze Zahl von 1 oder mehr darstellt, jedes DENDRITE, gleich oder verschieden, eine inhärent zumindest teilkonjugierte dendritische molekulare Struktur darstellt, welche Aryl- und/oder Heteroarylgruppen oder Stickstoff enthält und optional Vinyl- oder Acetylenylgruppen enthält, welche über sp²- oder sp-hybridisierte Kohlenstoffatome der (Hetero)arylvinyl- und -acetylenylgruppen oder über Einfachbindungen zwischen N und (Hetero)arylgruppen gebunden sind, wobei CORE mit einer Einfachbindung endet, welche an ein sp²-hybridisiertes (Ring)Kohlenstoffatom der ersten (Hetero)arylgruppe oder Stickstoff bindet, woran mehr als ein mindestens teilkonjugierter dendritischer Zweig gebunden ist, wobei das Kohlenstoffatom oder N einen Teil von DENDRITE bilden;
b)
CORE-[DENDRON]n
worin CORE eine Gruppe darstellt, die ein Metallkation enthält, n eine ganze Zahl von 2 oder mehr darstellt, jedes DENDRON, gleich oder verschieden, eine dendritische molekulare Struktur darstellt, welche mindestens ein Stickstoffatom enthält, welches Teil eines aromatischen Ringsystems bildet oder direkt an mindestens zwei aromatische Gruppen gebunden ist, so dass zwei oder mehr koordinierende Gruppen unterschiedliche DENDRON gebunden haben, wobei jedes Dendron Verzweigungseinheiten enthält und optional Verbindungsgruppen, wobei jede Verzweigungseinheit unabhängig voneinander ausgewählt ist aus Aryl, Heteroaryl oder Stickstoff und Aryl oder Heteroaryl ist optional kondensiert und wobei jede Verbindungsgruppe unabhängig voneinander gewählt ist aus einer oder mehreren Aryl-, Vinyl- oder Acetylenylgruppen, wobei CORE mit einer Einfachbindung zu dem ersten Stickstoffatom oder aromatischen Ring endet, an den mehr als eine dendritische Kette angebunden ist, wobei dieses Stickstoffatom oder dieser Ring einen Teil von DENDRON bilden;
c) die folgende Verbindung:

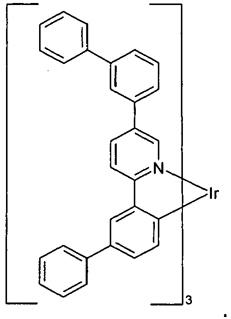

2. Verbindungen gemäß Anspruch 1, **dadurch gekennzeichnet, daß** für Y= R-C=C-R gilt.

3. Verbindungen gemäß Anspruch 1 oder 2, **dadurch gekennzeichnet, daß** b = 0 gilt.

4. Verbindungen gemäß einem oder mehreren der Ansprüche 1 bis 3, **dadurch gekennzeichnet, daß** für Ar = eine Arylgruppe gilt.

5. Verbindungen gemäß einem oder mehreren der Ansprüche 1 bis 3, **dadurch gekennzeichnet, daß** für Ar = eine Heteroarylgruppe gilt.

6. Verbindungen gemäß den Anspruch 4, **dadurch gekennzeichnet, daß** der Rest Ar für Benzol, Toluol, Xylol, Fluorbenzol, Difluorbenzol, Biphenyl, 1,2- bzw. 1,3- bzw. 1,4-Terphenyl, Tetraphenyl, Fluoren oder 1,3,5-Triphenylbenzol steht.

7. Verbindungen gemäß Anspruch 4, **dadurch gekennzeichnet, daß** Ar für Phenyl steht.

8. Verbindungen gemäß einem oder mehreren der Ansprüche 1 bis 7, **dadurch gekennzeichnet, daß** für Q = F, CN oder eine geradkettige oder verzweigte oder cyclische Alkyl- oder Alkoxygruppe mit 1 bis 6 C-Atomen, wobei eine oder mehrere benachbarte CH₂-Guppe durch -CF₂- ersetzt sein kann, gilt.

9. Verbindungen gemäß einem oder mehreren der Ansprüche 1 bis 8, **dadurch gekennzeichnet, daß** c größer oder gleich 1 ist.

10. Verfahren zur Herstellung der Verbindungen gemäß Anspruch 1, durch Umsetzung von Verbindungen der Formel (III), 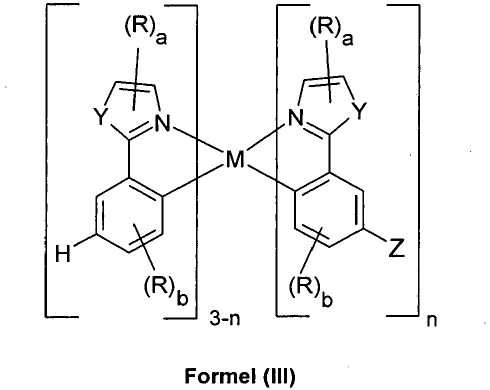 wobei die Symbole und Indizes M, Y, R, a, b und n die gleiche Bedeutungen wie in Anspruch 1 haben, und:
Z Cl, Br oder I ist,
mit einer Arylboronsäure oder einem Arylboronsäureester der Formel (V) 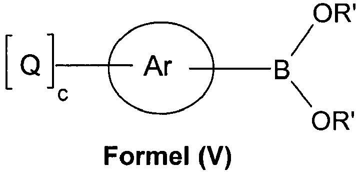 wobei die Symbole und Indizes Q, Ar und c die gleiche Bedeutungen wie in Anspruch 1 haben, und:
R' sind gleich oder verschieden bei jedem Auftreten, H oder ein aliphatischer oder aromatischer Kohlenwasserstoffrest mit 1 bis 20 C-Atomen, wobei mehrere Substituenten R' ein mono- oder polycyclisches Ringsystem aufspannen können,
in einem Reaktionsmedium und in Gegenwart eines Übergangsmetalls bzw. einer Übergangsmetallverbindung, eines Phosphor-haltigen bzw. Stickstoff-haltigen Additivs und einer Base.

11. Verbindungen gemäß Anspruch 1, **dadurch gekennzeichnet, daß**, ihre Reinheit (mittels 1 H-NMR und/oder HPLC bestimmt) mehr als 99% beträgt.

12. Mischungen von einer oder mehrerer Verbindungen der Formel (I) gemäß Anspruch 1 mit nicht konjugierten, teilkonjugierten oder konjugierten Polymeren.

13. Mischung gemäß Anspruch 12, **dadurch gekennzeichnet, dass** das Polymer aus der Gruppe Polyfluorene, Poly-spirobifluorene, Poly-para-phenylene, Poly-carbazole, Poly-vinylcarbazole, Polythiophene oder auch aus Copolymeren, die mehrere der hier genannten Einheiten aufweisen, ausgewählt ist.

14. Mischungen gemäß den Ansprüchen 12 und/oder 13, **dadurch gekennzeichnet, dass** das Polymer in organischen Lösemitteln löslich ist.

15. Verwendung der Verbindungen gemäß Anspruch 1 in organischen Elektrolumineszenz- und/oder Phosphoreszenz-Vorrichtungen.

16. Verwendung der Verbindungen gemäß Anspruch 1 und der Mischungen gemäß einem oder mehreren der Ansprüche 12, 13 und/oder 14 als Emissions-Schicht (EML) in organischen Elektrolumineszenz- und/oder Phosphoreszenz-Vorrichtungen.

17. Verwendung der Verbindungen gemäß Anspruch 1 und der Mischungen gemäß einem oder mehreren der Ansprüche 12, 13 und/oder 14 in Solarzellen, in photovoltaischen Vorrichtungen, wie organischen Photodetektoren oder organischen Solarzellen, in organischen ICs (organischen integrierten Schaltungen), in organischen Feld-Effekt-Transistoren (OTFT), in organischen Dünnschichtransitoren und in organischen-Feststofflasern.

18. Elektronisches Bauteil enthaltend die Verbindungen gemäß Anspruch 1 und die Mischungen gemäß einem oder mehreren der Ansprüche 12, 13 und/oder 14.

## Claims

1. Compounds of the formula (I), 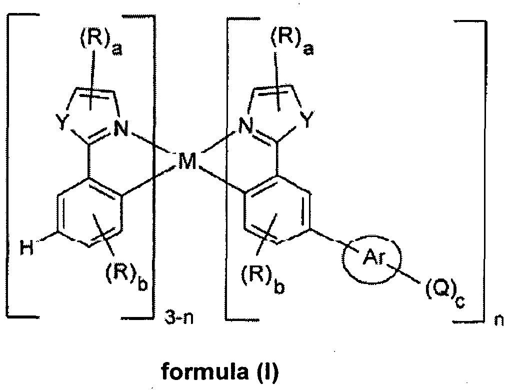 where the symbols and indices have the following meaning:
M Ir;
Y R-C=C-R or R-C=N;
R is, identically or differently on each occurrence, H, F, Cl, CN, a straight-chain or branched or cyclic alkyl or alkoxy group having 1 to 20 C atoms, where one or more H atoms may be replaced by F, or an aryl or heteroaryl group having 4 to 14 C atoms, which may be substituted by one or more non-aromatic radicals R; where a plurality of substituents R, both on the same ring and also on the two different rings, together may in turn form a further mono- or polycyclic ring system;
Ar is selected from benzene, biphenyl, 1,2- or 1,3- or 1,4-terphenyl, tetra-phenyl, fluorene, 1,3,5-triphenylbenzene, pyrimidine and 1,3,5-triazine;
Q is identical or different on each occurrence and stands for F or a straight-chain or branched or cyclic alkyl or alkoxy group having 1 to 20 C atoms, where one or more non-adjacent CH₂ groups may be replaced by -O- and where one or more H atoms may be replaced by F, or an aryl or heteroaryl group having 4 to 14 C atoms, which may be substituted by one or more non-aromatic radicals R;
a is 0, 1 or 2;
b is 0, 1, 2 or 3, preferably 0 or 1;
c is 0 to 15, preferably 0, 1, 2, 3, 4 or 5, particularly preferably 0, 1 or 2;
n is 1, 2 or 3;
the following compounds are excluded here:
a)
CORE-[DENDRITE]n
in which CORE represents a metal ion or a group which contains a metal ion, n represents an integer of 1 or more, each DENDRITE, identically or differently, represents a dendritic molecular structure which is inherently at least partly conjugated and which contains aryl and/or heteroaryl groups or nitrogen and optionally contains vinyl or acetylenyl groups which are bonded via sp²- or sp-hybridised carbon atoms of the (hetero)arylvinyl and acetylenyl groups or via single bonds between N and (hetero)aryl groups, where CORE terminates with a single bond which is bonded to an sp²-hybridised (ring) carbon atom of the first (hetero)aryl group or nitrogen, to which more than one at least partly conjugated dendritic branch is bonded, where the carbon atom or N forms part of DENDRITE;
b)
CORE-[DENDRON]n
in which CORE represents a group which contains a metal cation, n represents an integer of 2 or more, each DENDRON, identically or differently, represents a dendritic molecular structure which contains at least one nitrogen atom which forms part of an aromatic ring system or is bonded directly to at least two aromatic groups, so that two or more coordinating groups have bonded different DENDRONs, where each dendron contains branching units and optionally connecting groups, where each branching unit is selected, independently of one another, from aryl, heteroaryl or nitrogen and aryl or heteroaryl is optionally condensed and where each connecting group is selected, independently of one another, from one or more aryl, vinyl or acetylenyl groups, where CORE terminates with a single bond to the first nitrogen atom or aromatic ring, to which more than one dendritic chain is bonded, where this nitrogen atom or this ring forms part of DENDRON;
c) the following compound:

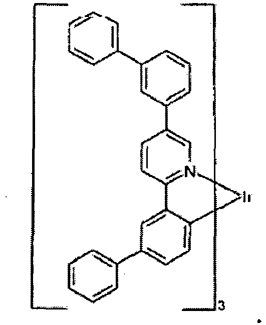

2. Compounds according to Claim 1, **characterised in that** Y = R-C=C-R.

3. Compounds according to Claim 1 or 2, **characterised in that** b = 0.

4. Compounds according to one or more of Claims 1 to 3, **characterised in that** Ar = an aryl group.

5. Compounds according to one or more of Claims 1 to 3, **characterised in that** Ar = a heteroaryl group.

6. Compounds according to Claim 4, **characterised in that** the radical Ar stands for benzene, toluene, xylene, fluorobenzene, difluorobenzene, biphenyl, 1,2- or 1,3- or 1,4-terphenyl, tetraphenyl, fluorene or 1,3,5-triphenylbenzene.

7. Compounds according to Claim 4, **characterised in that** Ar stands for phenyl.

8. Compounds according to one or more of Claims 1 to 7, **characterised in that** Q = F, CN or a straight-chain or branched or cyclic alkyl or alkoxy group having 1 to 6 C atoms, in which one or more adjacent CH₂ groups may be replaced by -CF₂-.

9. Compounds according to one or more of Claims 1 to 8, **characterised in that** c is greater than or equal to 1.

10. Process for the preparation of the compounds according to Claim 1 by reaction of compounds of the formula (III), 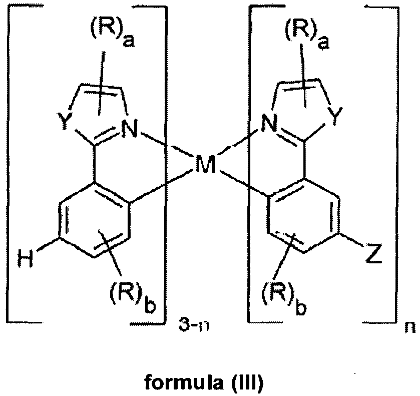 where the symbols and indices M, Y, R, a, b and n have the same meanings as in Claim 1, and:
Z is Cl, Br or I,
with an arylboronic acid or arylboronic acid ester of the formula (V) 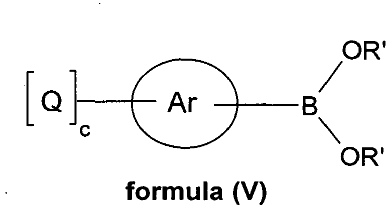 where the symbols and indices Q, Ar and c have the same meanings as in Claim 1, and:
R' are, identically or differently on each occurrence, H or an aliphatic or aromatic hydrocarbon radical having 1 to 20 C atoms, where a plurality of substituents R' may form a mono- or polycyclic ring system,
in a reaction medium and in the presence of a transition metal or transition-metal compound, a phosphorus-containing or nitrogen-containing additive and a base.

11. Compounds according to Claim 1, **characterised in that** their purity (determined by means of 1 H-NMR and/or HPLC) is greater than 99%.

12. Mixtures of one or more compounds of the formula (I) according to Claim 1 with non-conjugated, partly conjugated or conjugated polymers.

13. Mixture according to Claim 12, **characterised in that** the polymer is selected from the group polyfluorenes, polyspirobifluorenes, poly-para-phenylenes, polycarbazoles, polyvinycarbazoles, polythiophenes or also from copolymers which contain several of the units mentioned here.

14. Mixtures according to Claims 12 and/or 13, **characterised in that** the polymer is soluble in organic solvents.

15. Use of the compounds according to Claim 1 in organic electroluminescent and/or phosphorescent devices.

16. Use of the compounds according to Claim 1 and the mixtures according to one or more of Claims 12, 13 and/or 14 as emission layer (EML) in organic electroluminescent and/or phosphorescent devices.

17. Use of the compounds according to Claim 1 and the mixtures according to one or more of Claims 12, 13 and/or 14 in solar cells, in photovoltaic devices, such as organic photodetectors or organic solar cells, in organic ICs (organic integrated circuits), in organic field-effect transistors (OTFTs), in organic thin-film transistors and in organic solid-state lasers.

18. Electronic component containing the compounds according to Claim 1 and the mixtures according to one or more of Claims 12, 13 and/or 14.

## Revendications

1. Composés de la formule (I) : 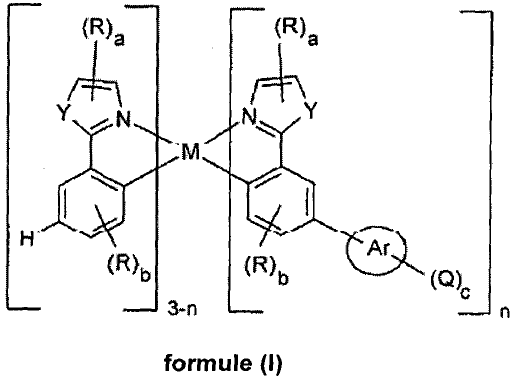 dans laquelle les symboles et indices présentent la signification qui suit:
M Ir;
Y R-C=C-R ou R-C=N ;
R est, de manière identique ou différente pour chaque occurrence, H, F, CI, CN, un groupe alkyle ou alcoxy en chaîne droite ou ramifié comportant 1 à 20 atome(s) de C, où un ou plusieurs atome(s) de H peut/ peuvent être remplacé(s) par F, ou un groupe aryle ou hétéroaryle comportant 4 à 14 atomes de C, lequel peut être substitué par un radical ou plusieurs radicaux non aromatique(s) R ; où une pluralité de substituants R, à la fois sur le même cycle et également sur les deux cycles différents, peuvent également former tour à tour un autre système de cycle monocyclique ou polycyclique;
Ar est choisi parmi benzène, biphényle, 1,2- ou 1,3- ou 1,4-terphényle, tétraphényle, fluorène, 1,3,5-triphénylbenzène, pyrimidine et 1,3,5-triazine ;
Q est identique ou différent pour chaque occurrence et représente F ou un groupe alkyle ou alcoxy en chaîne droite ou ramifié ou cyclique comportant 1 à 20 atome(s) de C, où un ou plusieurs groupe(s) CH₂ non adjacents peut/peuvent être remplacé(s) par -O- et où un ou plusieurs atome(s) de H peut/peuvent être remplacé(s) par F, ou un groupe aryle ou hétéroaryle comportant 4 à 14 atomes de C, lequel peut être substitué par un radical ou plusieurs radicaux non aromatique(s) R ;
a est 0, 1 ou 2 ;
b est 0, 1, 2 ou 3, de façon préférable 0 ou 1 ;
c i est 0 à 15, de façon préférable 0, 1, 2, 3, 4 ou 5, de façon particulièrement préférable 0, 1 ou 2 ;
n est 1, 2 ou 3;
les composés qui suivent sont exclus ici :
a)
CORE-[DENDRITE]ₙ
où CORE représente un ion métallique ou un groupe qui contient un ion métallique, n représente un entier de 1 ou plus, chaque DENDRITE représente, de manière identique ou différente, une structure moléculaire dendritique qui est de façon inhérente au moins partiellement conjuguée avec et qui contient des groupes aryle et/ou hétéroaryle ou de l'azote et qui, en option, contient des groupes vinyle ou acétylényle qui sont liés via des atomes de carbone hybridisés par sp² ou par sp des groupes (hétéro)arylvinyle et acétylényle ou via des liaisons simples entre N et des groupes (hétéro)aryle, où CORE est terminé par une liaison simple qui est liée à un atome de carbone (cycle) hybridisé par sp² du premier groupe (hétéro)aryle ou azote, atome auquel plus d'une ramification dendritique au moins partiellement conjuguée est liée, où l'atome de carbone ou N forme une partie de DENDRITE ;
b)
CORE-[DENDRON]n
où CORE représente un groupe qui contient un cation métallique, n représente un entier de 2 ou plus, chaque DENDRON représente, de manière identique ou différente, une structure moléculaire dendritique qui contient au moins un atome d'azote, laquelle structure fait partie d'un système de cycle aromatique ou est liée directement à au moins deux groupes aromatiques, de telle sorte que deux groupes de coordination ou plus comportent des DENDRONs différents liés, où chaque dendron contient des unités de ramification et en option, des groupes de connexion, où chaque unité de ramification est sélectionnée, indépendamment des autres, parmi aryle, hétéroaryle ou azote et aryle ou hétéroaryle est en option condensé et où chaque groupe de connexion est sélectionné, indépendamment des autres, parmi un ou plusieurs groupe(s) aryle, vinyle ou acétylènyle, où CORE est terminé par une liaison simple sur le premier atome d'azote ou cycle aromatique, atome d'azote ou cycle auquel plus d'une chaîne dendritique est liée, où cet atome d'azote ou ce cycle fait partie de DENDRON ;
c) le composé qui suit :

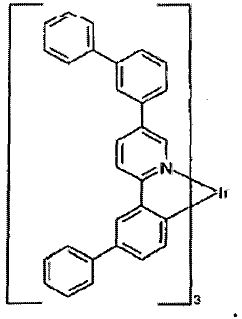

2. Composés selon la revendication 1, **caractérisés en ce que** Y = R-C=C-R.

3. Composés selon la revendication 1 ou 2, **caractérisés en ce que** b = 0.

4. Composés selon une ou plusieurs des revendications 1 à 3, **caractérisés en ce que** Ar = un groupe aryle.

5. Composés selon une ou plusieurs des revendications1 à 3, **caractérisés en ce que** Ar = un groupe hétéroaryle.

6. Composés selon la revendication 4, **caractérisés en ce que** le radical Ar représente benzène, toluène, xylène, fluorobenzène, difluorobenzène, biphényle, 1,2- ou 1,3- ou 1,4-terphényle, tétraphényle, fluorène ou 1,3,5-triphénylbenzène.

7. Composés selon la revendication 4, **caractérisés en ce que** Ar représente phényle.

8. Composés selon une ou plusieurs des revendications 1 à 7, **caractérisés en ce que** Q = F, CN ou un groupe alkyle ou alcoxy en chaîne droite ou ramifié ou cyclique comportant 1 à 6 atome(s) de C, où un ou plusieurs groupe(s) CH₂ adjacents peut/peuvent être remplacé(s) par -CF₂-.

9. Composés selon une ou plusieurs des revendications 1 à 8, **caractérisés en ce que** c est supérieur ou égal à 1.

10. Procédé pour la préparation des composés selon la revendication 1 par réaction de composés de la formule (III) : 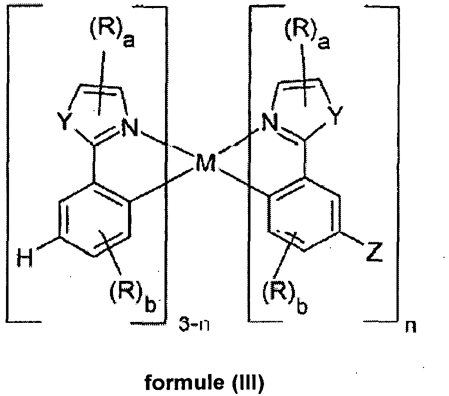 où les symboles et indices M, Y, R, a, b et n présentent les mêmes significations que selon la revendication 1, et :
Z est Cl, Br ou I,
avec un acide arylboronique ou un ester d'acide arylboronique de la formule (V) : 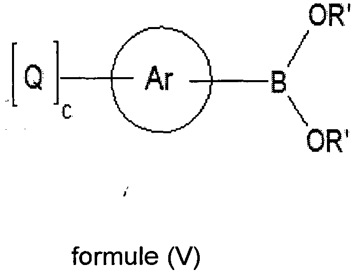 dans laquelle les symboles et indices Q, Ar et c présentent les mêmes significations que selon la revendication 1, et ;
R' sont, de manière identique ou différente pour chaque occurrence, H ou un radical hydrocarbone aliphatique ou aromatique comportant 1 à 20 atome(s) de C, où une pluralité de substituants R' peuvent former un système monocyclique ou polycyclique,
dans un milieu de réaction et en présence d'un métal de transition ou composé de métal de transition, d'un additif contenant du phosphore ou contenant de l'azote.et d'une base.

11. Composés selon la revendication 1, **caractérisés en ce que** leur pureté (déterminée au moyen d'une spectroscopie RMN 1 H et/ou d'une chromatographie en phase liquide à haute performance CLHP) est supérieure à 99%.

12. Mélanges d'un ou de plusieurs composé(s) de la formule (I) selon la revendication 1 avec des polymères non conjugués, partiellement conjugués ou conjugués.

13. Mélange selon la revendication 12, **caractérisé en ce que** le polymère est choisi parmi le groupe constitué par les polyfluorènes, les polyspirobifluorènes, les poly-para-phénylènes, les polycarbazoles, les polyvinycarbazoles, les polythiophènes ou également parmi les copolymères qui contiennent plusieurs des unités mentionnées ici.

14. Mélanges selon les revendications 12 et/ou 13, **caractérisés en ce que** le polymère est soluble dans des solvants organiques.

15. Utilisation des composés selon la revendication 1 dans des dispositifs électroluminescents et/ou phosphorescents organiques.

16. Utilisation des composés selon la revendication 1 et des mélanges selon une ou plusieurs des revendications 12, 13 et/ou 14 en tant que couche d'émission (EML) dans des dispositifs électroluminescents et/ou phosphorescents organiques.

17. Utilisation des composés selon la revendication 1 et des mélanges selon une ou plusieurs des revendications 12, 13 et/ou 14 dans des cellules solaires, dans des dispositifs photovoltaïques, tels que des photodétecteurs organiques ou des cellules solaires organiques, dans des IC organiques (circuits intégrés organiques), dans des transistors à effet de champ organiques (OTFT), dans des transistors à film mince organiques et dans des lasers à l'état solide ou à semiconducteur organiques.

18. Composant électronique contenant les composés selon la revendication 1 et les mélanges selon une ou plusieurs des revendications 12, 13 et/ou 14.
